# EUROPEAN PATENT APPLICATION

(11) **EP 3 151 350 A1**
(43) Date of publication of application: **05.04.2017**
(21) Application number: 14893571.1
(22) Date of filing: 13.11.2014
(51) Int. Cl.: H02B 1/20, H02G 5/06

(54) **BUS LINE STRUCTURE AND DISTRIBUTION BOARD USING SAME**

(30) Priority: 29.05.2014 JP 2014110892
(71) Applicant: Mitsubishi Electric Corporation, Chiyoda-ku Tokyo 100-8310 (JP)
(72) Inventor: SANGAWA Takayoshi, Tokyo 100-8310 (JP)
(74) Representative: Sajda, Wolf E.
(86) International application number: PCT/JP2014/080063
(87) International publication number: WO 2015/182009

(57) **Abstract**

In a busbar structure used inside a distribution board, a first horizontal busbar (2) and a second horizontal busbar (3), whose electric power is supplied from an electric power source of the same system, are placed in distributed groups at two positions in an upward or downward direction in a distribution-board's casing (1); a first vertical busbar (4) being individually connected to the first horizontal busbar (2) and a second vertical busbar (5) being also connected to the second horizontal busbar (3), group by group, branch in a vertical direction; and both of the vertical busbar (4) and the vertical busbar (5) are placed side by side in the upward or downward direction in the distribution-board's casing (1).

## Description

### TECHNICAL FIELD

The present invention relates to a busbar structure, and a distribution board using such a busbar structure.

### BACKGROUND ART

A conventional distribution board is configured in such a manner that, for example, a casing is divided into a front part, an intermediate part and a rear part; in the front part and the rear part of the divided casing, components such as a switchgear unit, an inverter, an electric power-source lead-in unit and so on, and at least one of horizontal busbars are housed; and, in the intermediate part of the casing, a vertical busbar is housed, and each of the casing's parts is fastened therebetween.

A horizontal busbar is a busbar for performing electric power supply to a load(s) in its entirety, and a vertical busbar is a busbar branched from the horizontal busbar to perform electric power supply individually to each of the units.

And then, as an arrangement of busbars, the horizontal busbar is placed in a horizontal direction in an upper-portion side of the casing, and the vertical busbar is integrally placed in a vertical direction from the top of the casing to the bottom thereof and is connected to the horizontal busbar at the top-end side (for example, refer to Patent Document 1).

### RELATED ART DOCUMENT

### Patent Document

Patent Document 1 Japanese Laid-Open Patent Application Publication
JP 2006-033 901 A (Page 3, FIGs. 1 to 2)

### SUMMARY OF THE INVENTION

### Problems to be Solved by the Invention

In a busbar structure of a conventional distribution board as stated in Patent Document 1 described above, a vertical busbar branched from a horizontal busbar is made as a single-piece vertical busbar extending from the top of a board to the bottom thereof. And then, connection positions of the horizontal busbar and the vertical busbar are provided in the uppermost portion of the vertical busbar.

For this reason, when a load of large capacity is mounted in proximity to the lowest stage of the board, it is required to let a large electric current flow over a span of an overall length of the vertical busbar, and so a large amount of heat results in being liberated from the vertical busbar.

In order to curb heat liberated from the vertical busbar in such a busbar structure, it is required to provide cooling by increasing a cross-sectional area of the vertical busbar, or increasing a surface area of the vertical busbar.

However, there arises a problem in that, when a cross-sectional area of the vertical busbar and a surface area thereof are enlarged, a board itself also becomes larger in accordance with the enlargement, so that installation efficiency of the board is lowered, and at the same time, cost-effectiveness thereof is degraded.

The present invention has been directed at solving these problems described above, and an object of the invention is to provide a busbar structure which can curb heat liberated from a vertical busbar due to an electric current flowing therethrough, and a distribution board using the busbar structure.

### Means for Solving the Problems

A busbar structure according to the present invention comprises:
a plurality of groups of horizontal busbars, whose electric power being supplied from an electric power source of a same system, being placed in distributed groups at a plurality of positions in an upward or downward direction in a casing; and
a plurality of groups of vertical busbars being individually connected to the plurality of groups of horizontal busbars group by group, and branching in a vertical direction, wherein the plurality of groups of vertical busbars is placed side by side in an upward or downward direction in the casing.

In addition, a distribution board according to the present invention is a board using the busbar structure described above.

### Effects of the Invention

According to the busbar structure of the present invention, a plurality of groups of horizontal busbars, whose electric power is supplied from an electric power source of the same system, is placed in distributed groups at a plurality of positions in an upward or downward direction in a casing; and a plurality of groups of vertical busbars being individually connected to the plurality of groups of horizontal busbars group by group and branching in a vertical direction is placed side by side in an upward or downward direction in the casing, so that, by dividing the vertical busbars connected to loads into two or more, electric currents flowing through the vertical busbars are distributed, and so an electric current flowing through in each of the vertical busbars can be reduced.

Because of this, heat liberated from the vertical busbars can be curbed, and thus, it becomes possible to lower a cross-sectional area of the vertical busbars and/or a surface area thereof.

In addition, according to the distribution board using the busbar structure, it is possible to achieve enhancing installation efficiency of the distribution board, and cost-effectiveness thereof.

### BRIEF DESCRIPTION OF DRAWINGS

- FIG. 1(a) and FIG. 1(b): are a front view and a side view illustrating a distribution board using a busbar structure according to Embodiment 1 of the present invention, respectively;
- FIG. 2(a) and FIG. 2(b): are a front view and a side view illustrating a distribution board using a busbar structure according to Embodiment 2 of the present invention, respectively; and
- FIG. 3(a) and FIG. 3(b): are a front view and a side view illustrating a distribution board using a busbar structure according to Embodiment 3 of the present invention, respectively.

### EMBODIMENTS FOR CARRYING OUT THE INVENTION

### Embodiment 1.

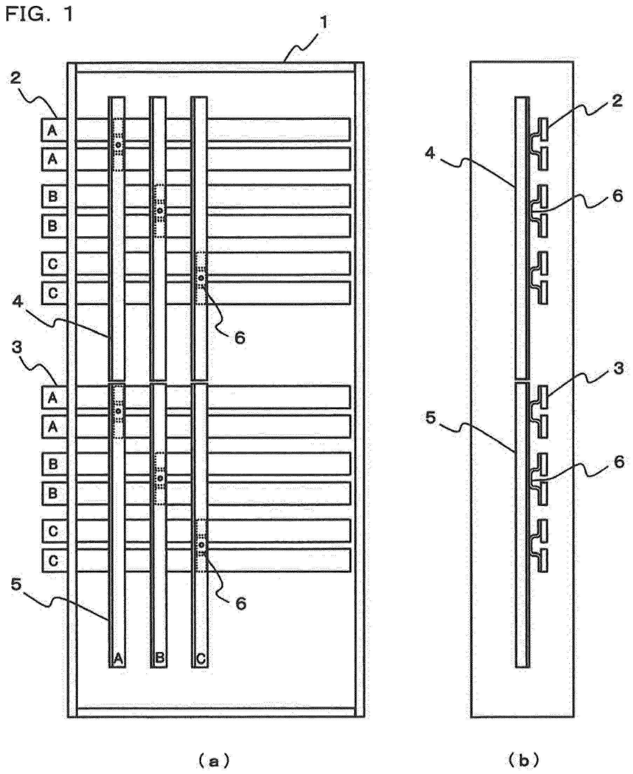

FIGs. 1(a) and 1(b) are diagrams illustrating a distribution board using a busbar structure according to Embodiment 1; FIG. 1(a) is a front view, and FIG. 1(b), a side view. Hereinafter, the explanation will be made referring to the drawings.

The distribution board of the present invention is a cubicle or board presuming an appropriate response to a lower voltage and a large electric current. As illustrated in the figures, three-phase horizontal busbars are configured to include double horizontal busbar conductors per each of the phases.

Further, the three-phase horizontal busbars are divided into two so that a first horizontal busbar 2 is placed in an upper-portion side of a distribution-board's casing 1 and a second horizontal busbar 3 is placed in an intermediate portion thereof, and are oriented in a horizontal direction on a group-by-group basis and fixed on the distribution-board's casing 1 by way of insulators not shown in the figures. Each of the horizontal busbars 2 and 3 is made of copper material of flat-shaped plate with its cross section rectangularly shaped, for example.

The first horizontal busbar 2 and the second horizontal busbar 3 are the busbars receiving electric power supplied from an electric power source of the same system.

To each of the horizontal busbars, vertical busbars extending in a vertical direction are individually connected. Namely, a first vertical busbar 4 is individually connected with respect to the first horizontal busbar 2, and a second vertical busbar 5, with respect to the second horizontal busbar 3, on a one-by-one basis. For example, when a phase is the phase-A, one conductor of the first vertical busbar 4 is connected with respect to two conductors of phase-A horizontal busbar of the first horizontal busbar 2 by way of connection conductors 6.

By using the connection conductors 6, the interference is prevented from a horizontal busbar of another phase and a vertical busbar thereof. As to the phase-B and phase-C also, similar connections are applied; and further, the second horizontal busbar 3 and the second vertical busbar 5 are also similarly connected.

In the present invention as described above, the structure is achieved by connecting one group of vertical busbar constituted of three busbar conductors of three-phase with respect to one group of horizontal busbar constituted of six horizontal busbar conductors of three-phase, and by placing the two groups of them upwardly and downwardly in the distribution-board's casing 1.

Each of the vertical busbars 4 and 5 is made of a copper plate formed in the shape of a figure-L as its cross section; and one face of the figure-L shape is made as a connection face with the horizontal busbar, and another face protrudes on the opposite side to the side of the horizontal busbar, for example. And then, the busbars are fixed on the distribution-board's casing 1 by means of dielectric support members (not shown in the figures).

In addition, on a front side of the distribution-board's casing 1 in which the busbars are accommodated as shown in FIG. 1, for example, a plurality of unit devices connected to a load(s) is placed side by side in an upward or downward direction, though those are omitted in the figures. Moreover, as the occasion requires, the distribution board is configured by accommodating an electric power-source lead-in unit.

In that case, by using the vertical busbar with its cross section in the shape of a figure-L as described above, edges protruding on the opposite side to the side of the horizontal busbar are utilized in such a way that, by inserting contacts on a rear side of the unit device into the vertical-busbar's protruding edges, the unit device is connected to the vertical busbar, and also that, by pulling out a portion of the contacts, the disconnection can be achieved.

However, the cross-sectional shape of the vertical busbar is not necessarily limited to the shape of a figure-L, another shape may be adopted.

Next, the explanation will be made for the operations of the busbar structure configured as stated in the present invention.

In a conventional busbar structure such as that in Patent Document 1, a single-piece vertical busbar configured from an upper portion of a distribution-board's casing 1 to a lower portion thereof is connected to a horizontal busbar placed in the upper-portion side of the distribution-board's casing 1.

Therefore, when load devices of large capacity are mounted in the lower-portion side of the distribution-board's casing 1, for example, a large electric current flows over a span of an overall length of the vertical busbar, resulting in a large amount of heat liberated therefrom.

For dealing therewith, in the busbar structure in this embodiment, horizontal busbars are divided into the first horizontal busbar 2 and the second horizontal busbar 3 and are placed in distributed groups at two positions in an upward or downward direction in the distribution-board's casing 1; and the first vertical busbar 4 and the second vertical busbar 5 are individually connected to the horizontal busbars 2 and 3, respectively, and the vertical busbars are placed side by side in the upward or downward direction.

Accordingly, it is suitable that the first vertical busbar 4 takes on a cross-sectional area in line with a load current of devices connected to the first vertical busbar, and is similarly suitable that the second vertical busbar 5 takes on a cross-sectional area in line with a load current of devices connected to the second vertical busbar.

In addition, when load devices of large capacity are mounted on the lowest stage, for example, it is adequate that a large electric current is flowed only through the second vertical busbar 5; and thus, heat liberated from the vertical busbars can be curbed.

As a result, a cross-sectional area of each of the vertical busbars 4 and 5, and/or a surface area thereof can be made smaller.

In the explanation hitherto, the horizontal busbar is constituted of double busbar conductors per each of the phases; however, the number is not necessarily limited to this, it may be adopted that a horizontal busbar is configured by a single busbar conductor per each of the phases.

Moreover, the explanation has been made for the horizontal busbars constituted of two groups of horizontal busbars, and for two groups of vertical busbars individually connected thereto; however, the number of groups is not limited to the "two," but an application can be made to a busbar structure in which a plurality of groups of vertical busbars is individually connected to a plurality of groups of horizontal busbars.

According to the busbar structure in Embodiment 1 as described above, a plurality of groups of horizontal busbars, whose electric power is supplied from an electric power source of the same system, is placed in distributed groups at a plurality of positions in an upward or downward direction in a casing; and a plurality of groups of vertical busbars being individually connected to the plurality of groups of horizontal busbars group by group and branching in a vertical direction is placed side by side in an upward or downward direction in the casing.

Hence, by dividing the vertical busbars connected to loads into two or more, electric currents flowing through the vertical busbars are distributed, and so an electric current flowing through in each of the vertical busbars can be reduced.

Because of this, heat liberated from the vertical busbars can be curbed, and thus, it becomes possible to lower a cross-sectional area of the vertical busbars and/or a surface area thereof.

### Embodiment 2.

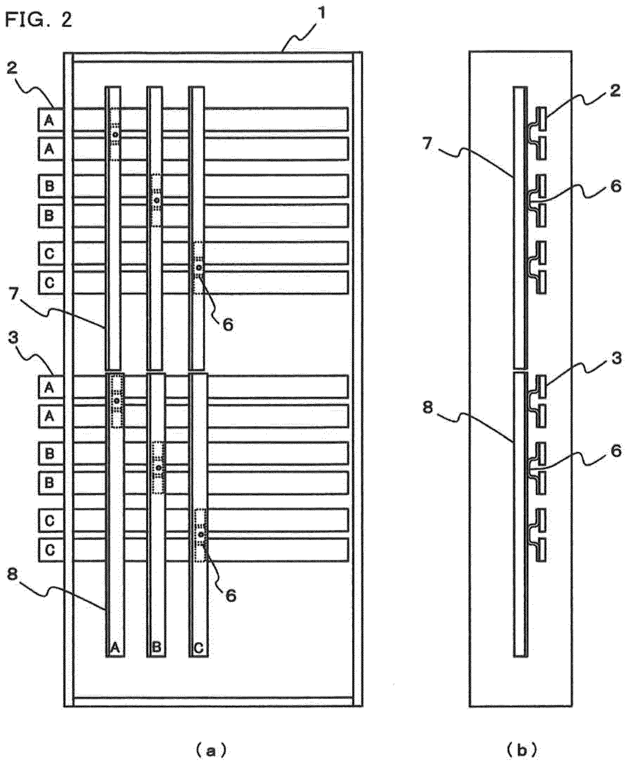

FIGs. 2(a) and 2(b) are diagrams illustrating a distribution board using a busbar structure according to Embodiment 2; FIG. 2(a) is a front view, and FIG. 2(b), a side view. Because the portions correspond to those of FIG. 1 in Embodiment 1, the same reference numerals and symbols designate equivalent items or portions, and thus their explanation is omitted; the explanation will be made focusing on different points.

In this embodiment also, similarly to Embodiment 1, horizontal busbars are divided into the first horizontal busbar 2 and the second horizontal busbar 3, and are placed in distributed groups; and also vertical busbars are divided into a first vertical busbar 7 and a second vertical busbar 8, and are individually connected to the horizontal busbars 2 and 3, respectively.

A different point is a point in which, in this embodiment, a cross-sectional area and a surface area differ between the first vertical busbar 7 and the second vertical busbar 8 in accordance with a capacity of connected load.

In FIGs. 2(a) and 2(b), a case is illustrated in which a cross-sectional area of the second vertical busbar 8 and a surface area thereof are made larger than those of the first vertical busbar 7.

For example, when load devices of large capacity are mounted on a lower stage side of the distribution-board's casing 1, a cross-sectional area of the second vertical busbar 8 and a surface area thereof are increased on the lower stage side because it is required to flow a large electric current through the second vertical busbar 8; and, when load devices of large capacity are not mounted on an upper stage side of the casing, it is not required to increase a cross-sectional area of the first vertical busbar 7 and a surface area thereof in the upper stage side.

An example in FIGs. 2(a) and 2(b) is the one presuming such a case. On the contrary, when load devices of large capacity are mounted on the upper stage side, it is suitable that a cross-sectional area of the first vertical busbar 7 and a surface area thereof are increased.

According to the above, by changing the size (cross-sectional area and surface area) of each of the vertical busbars 7 and 8 in accordance with a capacity of a load to be mounted, waste in the vertical busbars can be eliminated, so that reduction of costs and miniaturization are made possible.

According to the busbar structure in Embodiment 2 as described above, the plurality of groups of vertical busbars is configured to differ in a cross-sectional area and/or a surface area from one another in accordance with a capacity of a load connected to each of the groups, so that, by making the size of vertical busbars to optimum size, electric power can be efficiently supplied into the load.

### Embodiment 3.

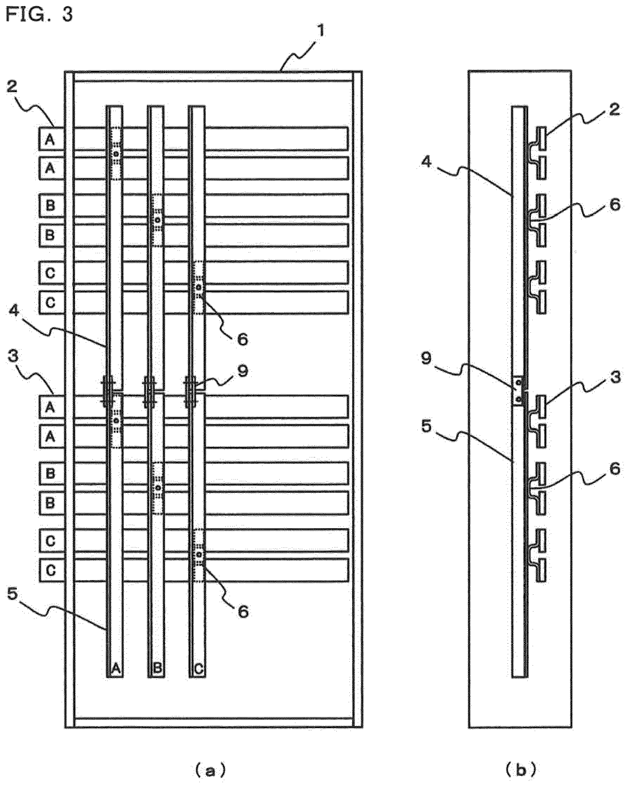

FIGs. 3(a) and 3(b) are diagrams illustrating a distribution board using a busbar structure according to Embodiment 3; FIG. 3(a) is a front view, and FIG. 3(b), a side view. Because the portions correspond to those of FIG. 1 in Embodiment 1, the same reference numerals and symbols designate equivalent items or portions, and thus their explanation is omitted; the explanation will be made focusing on different points.

In this embodiment also, vertical busbars are divided into two, and are individually connected to horizontal busbars on a group by group basis, which is similar to Embodiment 1; however, a different point is a point in which the vertical busbars upwardly and downwardly separated to each other are connected in a central portion.

As in FIGs. 3(a) and 3(b), end portions of the first vertical busbar 4 in a lower-portion side and end portions of the second vertical busbar 5 in an upper-portion side are joined together by way of interconnection conductors 9. Each of the vertical busbars 4 and 5 is formed in the shape of a figure-L in the cross section as described in Embodiment 1, and therefore, by utilizing faces perpendicular with respect to connection faces with the horizontal busbars 2 and 3, the interconnection conductors 9 of plate shapes are abutted from both faces of those faces, and are joined together by bolting.

However, the structure is not necessarily limited to this interconnection structure, it is simply required that the first vertical busbar 4 and the second vertical busbar 5 are electrically connected to each other.

According to the above, by joining together the vertical busbars 4 and 5 upwardly and downwardly divided into two in a central portion and thus by integrally connecting them, the balances can be achieved between electric currents flowing through each of the horizontal busbars 2 and 3, and between those flowing through each of the vertical busbars 4 and 5.

And then, when load devices of large capacity are mounted in proximity to a central portion of the distribution-board's casing 1, for example, electric currents can be supplied from the upwardly and downwardly vertical busbars 4 and 5, respectively; and therefore, a cross-sectional area of the vertical busbars 4 and 5, and a surface area thereof can be made smaller.

Because of this, reduction of costs and miniaturization can be made for a distribution board, so that it is possible to achieve enhancing installation efficiency of the distribution board for accommodation and cost-effectiveness thereof.

Note that, in FIGs. 3(a) and 3(b), the explanation has been made for the first vertical busbar 4 and the second vertical busbar 5 which have the same shape; however, as in Embodiment 2, it is also applicable to a case in which a cross-sectional area and a surface area differ in both the vertical busbars 4 and 5.

According to the busbar structure in Embodiment 3 as described above, the plurality of groups of vertical busbars joined to one another by interconnection conductors is integrally connected between the groups, so that the balances can be achieved between the horizontal busbars and between the vertical busbars each placed in a plurality of distributed groups, and also electric power can be supplied from the respective vertical busbars even when load devices of large capacity are connected in vicinity to the middle of the distribution board; and therefore, it becomes possible to lower a cross-sectional area of the vertical busbars and a surface area thereof.

Moreover, a distribution board is achieved to comprise the busbar structure as set forth in any one of Embodiment 1 through Embodiment 3, so that the distribution board can be obtained in which, by curbing heat liberated from vertical busbars, a cross-sectional area of the vertical busbars and/or a surface area thereof can be lowered. For these reasons, it is possible to achieve enhancing installation efficiency of the distribution board and cost-effectiveness thereof.

Note that, in the present invention, each of the embodiments can be freely combined, and/or each of the embodiments can be appropriately modified or eliminated without departing from the scope of the invention.

### Explanation of Numerals and Symbols

- 1: distribution-board's casing
- 2: first horizontal busbar
- 3: second horizontal busbar
- 4: first vertical busbar
- 5: second vertical busbar
- 6: connection conductor
- 7: first vertical busbar
- 8: second vertical busbar
- 9: interconnection conductor.

## Claims

1. A busbar structure, comprising:
- a plurality of groups of horizontal busbars, whose electric power being supplied from an electric power source of a same system, being placed in distributed groups at a plurality of positions in an upward or downward direction in a casing; and
- a plurality of groups of vertical busbars being individually connected to the plurality of groups of horizontal busbars group by group, and branching in a vertical direction,
wherein the plurality of groups of vertical busbars is placed side by side in an upward or downward direction in the casing.

2. The busbar structure as set forth in claim 1,
wherein the plurality of groups of vertical busbars is configured to differ in a cross-sectional area and/or a surface area from one another in accordance with a capacity of a load connected to each of the groups.

3. The busbar structure as set forth in claim 1 or claim 2,
wherein the plurality of groups of vertical busbars joined to one another by interconnection conductors is integrally connected between the groups.

4. A distribution board,
comprising a busbar structure as set forth in any one of claims 1 through 3.
